# EUROPEAN PATENT APPLICATION

(11) **EP 4 770 240 A1**
(43) Date of publication of application: **01.07.2026**
(21) Application number: 24869973.8
(22) Date of filing: 09.07.2024
(51) Int. Cl.: H04W 72/20

(54) **WIRELESS COMMUNICATION METHOD, SYSTEM, APPARATUS AND DEVICE, AND READABLE STORAGE MEDIUM**

(30) Priority: 27.09.2023 CN 202311289157
(71) Applicant: Shenzhen Inovance Technology Co., Ltd., Shenzhen, Guangdong 518000 (CN)
(72) Inventor: JIN, Xing, Shenzhen, Guangdong 518000 (CN); ZHANG, Huanhuan, Shenzhen, Guangdong 518000 (CN); ZHOU, Xiong, Shenzhen, Guangdong 518000 (CN); RUAN, Shuisheng, Shenzhen, Guangdong 518000 (CN); LI, Yicong, Shenzhen, Guangdong 518000 (CN)
(74) Representative: Osterhoff, Utz
(86) International application number: PCT/CN2024/104524
(87) International publication number: WO 2025/066417

(57) **Abstract**

The present application discloses a wireless communication method, a system, an apparatus, a device, and a readable storage medium. In the present application, when a first communication terminal generates a first protocol data unit, a frame identifier in a frame header of the first protocol data unit may characterize a signaling type and a length type of a frame body, and the length type may be a fixed length type or a variable length type. In response to that the length of the frame body is fixed and the second communication terminal knows that the frame body in the first protocol data unit is of the fixed length type, the second communication terminal may take content at a fixed position as the frame body.

## Description

### CROSS-REFERENCE TO RELATED APPLICATIONS

This application claims priority to Chinese patent application No. 202311289157.6, filed on September 27, 2023, the entire contents of which are incorporated herein by reference.

### TECHNICAL FIELD

The present application relates to the technical field of wireless communication, and in particular to a wireless communication method, a system, an apparatus, a device, and a readable storage medium.

### BACKGROUND

Currently, in the field of wireless communication technologies, there are many wireless communication approaches, such as 4G (the 4th Generation Mobile Communication Technology), 5G (5th-Generation Mobile Communication Technology), Wi-Fi (Wireless Fidelity), WIA-FA (a wireless network technology specification), and EUHT (Enhanced Ultra High Throughput) technology. Among them, WIA-FA and EUHT technologies are mainly oriented to industrial scenarios. However, when wireless communication interaction is implemented in industrial scenarios based on WIA-FA and EUHT technologies, information redundancy still exists, thereby affecting communication efficiency.

### SUMMARY

A main objective of the present application is to provide a wireless communication method, aiming to solve the technical problem that, when wireless communication interaction is implemented in industrial scenarios, information redundancy exists in conventional communication approaches, thereby affecting communication efficiency.

To achieve the above objective, the present application provides a wireless communication method applied to a first communication terminal, and the method includes the following steps:
generating a frame body according to signaling content;
generating a frame header according to the signaling content, where the frame header includes at least a frame identifier configured to characterize a signaling type of the signaling content and a length type of the frame body, and the length type is a fixed length type or a variable length type;
combining the frame header and the frame body into a first protocol data unit; and
transmitting the first protocol data unit to a second communication terminal.

In an embodiment, the generating the frame header according to the signaling content includes:
generating the frame identifier according to the signaling type of the signaling content;
in response to that the frame identifier characterizes the fixed length type, using the frame identifier as the frame header;
in response to that the frame identifier characterizes the variable length type, generating length indication information based on the frame body; and
combining the frame identifier and the length indication information to obtain the frame header.

In an embodiment, the wireless communication method further include:
in response to that multiple signaling contents exist, generating the first protocol data unit by multiplexing signaling contents that meet a first preset multiplexing condition, where the first preset multiplexing condition at least includes that multiplexed signaling contents are capable of being executed in parallel; and
transmitting the first protocol data unit to the second communication terminal.

In an embodiment, the generating the first protocol data unit by multiplexing the signaling contents that meet a first preset multiplexing condition includes:
after receiving the signaling content, determining whether a first multiplexing set waiting to be multiplexed and transmitted exists;
in response to that the first multiplexing set does not exist, generating a new first multiplexing set and adding the signaling content into the new first multiplexing set; where in response to that multiple signaling contents exist in the first multiplexing set, after the first multiplexing set is generated for a preset time, generating the first protocol data unit by multiplexing signaling contents in the first multiplexing set, and destroying the first multiplexing set;
in response to that the first multiplexing set exists, determining whether the signaling content is capable of being executed in parallel with each signaling content to be transmitted in the first multiplexing set;
in response to that parallel execution is possible, adding the signaling content into the first multiplexing set; and
in response to that parallel execution is not possible, generating a new first multiplexing set and adding the signaling content into the new first multiplexing set.

In an embodiment, the generating the first protocol data unit by multiplexing signaling contents in the first multiplexing set includes:
for each signaling content in the first multiplexing set, generating the frame body according to the signaling content and generating the frame header according to the signaling content, and combining the generated frame body and frame header into a signaling frame; and
after traversing each signaling content in the first multiplexing set to obtain each signaling frame, combining the signaling frames into the first protocol data unit.

To achieve the above objectives, the present application further provides a wireless communication method applied to a second communication terminal, the method further including:
receiving a first protocol data unit transmitted by a first communication terminal and parsing a frame header of the first protocol data unit to obtain frame header information, where the frame header information includes at least a frame identifier;
determining a signaling type and a length type of the frame body according to the frame identifier, and determining a frame body in the first protocol data unit based on the length type, where the length type is a fixed length type or a variable length type; and
parsing the frame body based on the signaling type to obtain signaling content.

In an embodiment, the determining the frame body in the first protocol data unit based on the length type includes:
in response to that the length type is the fixed length type, using a first preset fixed region in the first protocol data unit as the frame body;
in response to that the length type is the variable length type, using a second preset fixed region in the first protocol data unit as length indication information; and
using a region in the first protocol data unit indicated by the length indication information as the frame body.

In an embodiment, the wireless communication method includes:
in response to that multiple signaling contents are obtained by parsing the first protocol data unit, executing signaling corresponding to each signaling content and respectively generating feedback content of each instruction;
generating the second protocol data unit by multiplexing feedback contents that meet a second preset multiplexing condition; and
transmitting the second protocol data unit to the first communication terminal.

In an embodiment, the generating the second protocol data unit by multiplexing the feedback contents that meet the second preset multiplexing condition includes:
after generating the feedback content, determining whether a second multiplexing set waiting to be multiplexed and transmitted exists;
in response to that the second multiplexing set does not exist, generating a new second multiplexing set and adding the feedback content into the new second multiplexing set; in response to that multiple feedback contents exist in the second multiplexing set, after the second multiplexing set is generated for a preset time, generating the second protocol data unit by multiplexing feedback contents in the second multiplexing set, and destroying the second multiplexing set; and
in response to that the second multiplexing set exists, adding the feedback content into the second multiplexing set.

To achieve the above objectives, the present application further provides a wireless communication system, the wireless communication system including:
a first communication terminal configured to:
generate a frame body according to signaling content;
generate a frame header according to the signaling content, where the frame header includes at least a frame identifier configured to characterize a signaling type of the signaling content and a length type of a frame body, and the length type is a fixed length type or a variable length type;
combine the frame header and the frame body into a first protocol data unit, and transmit the first protocol data unit to a second communication terminal; and
a second communication terminal configured to:
   receive the first protocol data unit transmitted by the first communication terminal and parse a frame header of the first protocol data unit to obtain frame header information, where the frame header information includes at least a frame identifier;
   determine a signaling type and a length type of a frame body according to the frame identifier, and determine a frame body in the first protocol data unit based on the length type, where the length type is a fixed length type or a variable length type; and
   parse the frame body based on the signaling type to obtain the signaling content.

To achieve the above objectives, the present application further provides a wireless communication apparatus applied to a first communication terminal, the wireless communication apparatus including:
a first generation module configured to generate a frame body according to signaling content;
a second generation module configured to generate a frame header based on the signaling content, where the frame header includes at least a frame identifier configured to characterize a signaling type of the signaling content and a length type of the frame body, and the length type is a fixed length type or a variable length type; and
a transmission module configured to combine the frame header and the frame body into a first protocol data unit and transmit the first protocol data unit to a second communication terminal.

To achieve the above objectives, the present application further provides a wireless communication apparatus applied to a second communication terminal, the wireless communication apparatus including:
a first parsing module configured to receive the first protocol data unit transmitted by a first communication terminal and parse a frame header of the first protocol data unit to obtain frame header information, where the frame header information includes at least a frame identifier;
a determination module configured to determine a signaling type and a length type of a frame body according to the frame identifier, and determine the frame body in the first protocol data unit based on the length type, where the length type is a fixed length type or a variable length type; and
a second parsing module configured to parse the frame body based on the signaling type to obtain signaling content.

To achieve the above objectives, the present application further provides a wireless communication device, which includes: a memory, a processor, and a wireless communication program stored in the memory and executable on the processor. When the wireless communication program is executed by the processor, it implements the steps of the wireless communication method described above.

To achieve the above objectives, the present application further provides a readable storage medium, which is a computer-readable storage medium, on which a wireless communication program is stored, and when the wireless communication program is executed by a processor, it implements the steps of the wireless communication method as described above.

Embodiments of the present application provide a wireless communication method, system, apparatus, device, and readable storage medium.

Applied to a first communication terminal, the wireless communication method includes:
generating a frame body according to signaling content;
generating a frame header according to the signaling content, where the frame header at least includes a frame identifier, the frame identifier being configured to characterize a signaling type of the signaling content and a length type of the frame body, and the length type is a fixed length type or a variable length type;
combining the frame header and the frame body into a first protocol data unit, and transmitting the first protocol data unit to a second communication terminal.

Applied to a second communication terminal, the wireless communication method includes:
receiving the first protocol data unit transmitted by the first communication terminal, and parsing a frame header of the first protocol data unit to obtain frame header information, where the frame header information at least includes a frame identifier;
determining the signaling type and the length type of the frame body according to the frame identifier, and determining the frame body in the first protocol data unit based on the length type, where the length type is a fixed length type or a variable length type;
parsing the frame body based on the signaling type to obtain signaling content.

In the embodiments of the present application, when the first communication terminal generates a specific first protocol data unit, the frame identifier in the frame header of the first protocol data unit may characterize the signaling type of the signaling content and the length type of the frame body, and the length type may be the fixed length type or the variable length type. It can be understood that, in response to that the length of the frame body is fixed, frame body length indication information does not need to be added into the first protocol data unit, and in response to that the second communication terminal knows that the frame body in the first protocol data unit is of the fixed length type, the second communication terminal may take content at a fixed position as the frame body. Therefore, in response to that the frame body is of the fixed length type, by simultaneously characterizing, through the frame identifier, the signaling type of the signaling content and the length type of the frame body, signaling interactive communication between the first communication terminal and the second communication terminal may be implemented without transmitting frame body length indication information by the first communication terminal, thereby saving communication overhead and achieving the purpose of improving communication efficiency.

### BRIEF DESCRIPTION OF THE DRAWINGS

FIG. 1 is a schematic structural diagram of a device of a hardware operating environment involved in an embodiment of the present application.
FIG. 2 is a schematic flowchart of a wireless communication method according to a first embodiment of the present application.
FIG. 3 is a frame identifier information mapping table in the wireless communication method of the present application.
FIG. 4 is a schematic diagram of a frame structure of a signaling frame in the wireless communication method of the present application.
FIG. 5 is a schematic diagram of a scenario in which a first communication terminal performs multiplex transmission in the wireless communication method of the present application.
FIG. 6 is a schematic flowchart of the wireless communication method according to a second embodiment of the present application.
FIG. 7 is a schematic diagram of a scenario in which a second communication terminal performs multiplex transmission in the wireless communication method of the present application.
FIG. 8 is a schematic structural diagram of a wireless communication apparatus in the wireless communication method of the present application.
FIG. 9 is a schematic diagram of another wireless communication apparatus in the wireless communication method of the present application.

The realization of the purpose, functional features and advantages of the present application will be further explained in conjunction with the embodiments and with reference to the accompanying drawings.

### DETAILED DESCRIPTION OF THE EMBODIMENTS

It should be understood that the specific embodiments described herein are only to explain the present application and are not to limit the present application.

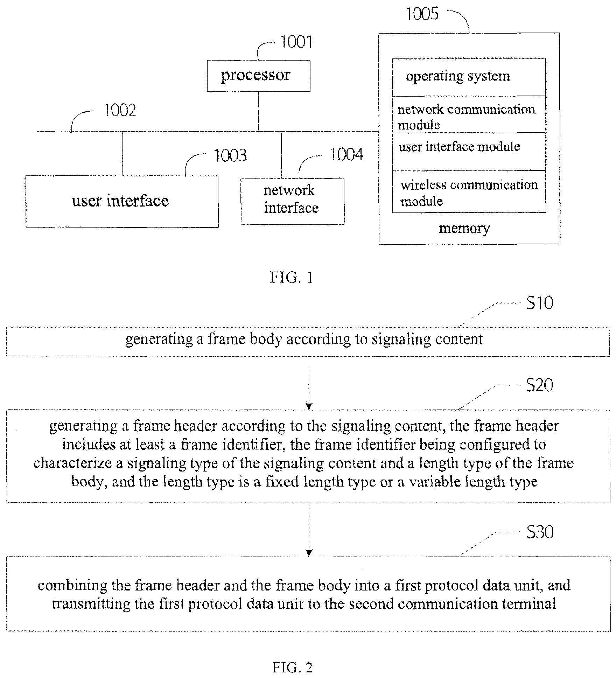

As shown in FIG. 1, FIG. 1 is a schematic diagram of the device structure of hardware operating environment involved in the embodiment of the present application.

The device of the embodiment of the present application can be a base station, or can be an electronic terminal device with network communication function such as a PC, a smart phone, a tablet computer, a portable computer, etc.

As shown in FIG. 1, the device may include a processor 1001, such as a CPU, a network interface 1004, a user interface 1003, a memory 1005, and a communication bus 1002. The communication bus 1002 is configured to implement communication between the components. The user interface 1003 may include a display, an input unit such as a keyboard. The user interface 1003 may also include a standard wired interface and a wireless interface. The network interface 1004 may further include a standard wired interface and a wireless interface (such as a Wireless Fidelity (Wi-Fi) interface). The memory 1005 may be a high-speed random access memory (RAM) or a non-volatile memory, such as a magnetic disk memory. The memory 1005 may also be a storage device independent of the foregoing processor 1001.

In an embodiment, the device may also include a camera, a Radio Frequency (RF) circuit, a sensor, an audio circuit, a Wi-Fi module, and so on. The sensors may be, for example, a light sensor, a motion sensor, and other sensors. Specifically, the light sensor may include an ambient light sensor and a proximity sensor. The ambient light sensor may adjust the brightness of the display according to the brightness of the ambient light. The proximity sensor may turn off the display and/or the backlight when the mobile terminal is moved to the ear. A gravity acceleration sensor, as a kind of motion sensor, may detect the magnitude of acceleration in various directions (usually three axes). The gravity acceleration sensor may detect the magnitude and direction of gravity when it is stationary, and may be configured to identify the gesture of the mobile terminal (such as horizontal and vertical screen switching, related games, magnetometer attitude calibration), vibration recognition related functions (such as pedometer, tap), etc. The mobile terminal may also be configured with other sensors such as a gyroscope, a barometer, a hygrometer, a thermometer, an infrared sensor, and the like, which will not be repeated here.

Those skilled in the art should understand that the structure shown in FIG. 1 does not constitute a limitation on the device, and may include more or fewer components, a combination of some components, or differently arranged components than shown in the figure.

As shown in FIG. 1, the memory 1005 as a computer storage medium may include an operating system, a network communication module, a user interface module, and a wireless communication program.

In the device shown in FIG. 1, the network interface 1004 is mainly configured to connect to a background server and perform data communication with the background server. The user interface 1003 is mainly configured to connect to a client (user) and perform data communication with the client. The processor 1001 may be configured to call the wireless communication program stored on the memory 1005, and perform the following operations:
applied to the first communication terminal, including:
generating a frame body according to signaling content;
generating a frame header according to the signaling content, the frame header includes at least a frame identifier configured to characterize a signaling type of the signaling content and a length type of the frame body, and the length type is a fixed length type or a variable length type;
combining the frame header and the frame body into a first protocol data unit; and
transmitting the first protocol data unit to a second communication terminal.

Furthermore, the processor 1001 can call the wireless communication program stored in the memory 1005 and further perform the following operations:
the generating the frame header according to the signaling content includes:
generating the frame identifier according to the signaling type of the signaling content;
in response to that the frame identifier characterizes the fixed length type, using the frame identifier as the frame header;
in response to that the frame identifier characterizes the variable length type, generating length indication information based on the frame body; and
combining the frame identifier and the length indication information to obtain the frame header.

Furthermore, the processor 1001 can call the wireless communication program stored in the memory 1005 and further perform the following operations:
the steps of the wireless communication method further include:
in response to that multiple signaling contents exist, generating the first protocol data unit by multiplexing signaling contents that meet a first preset multiplexing condition, the first preset multiplexing condition at least includes that multiplexed signaling contents are capable of being executed in parallel; and
transmitting the first protocol data unit to the second communication terminal.

Furthermore, the processor 1001 can call the wireless communication program stored in the memory 1005 and further perform the following operations:
the generating the first protocol data unit by multiplexing the signaling contents that meet a first preset multiplexing condition includes:
after receiving the signaling content, determining whether a first multiplexing set waiting to be multiplexed and transmitted exists;
in response to that the first multiplexing set does not exist, generating a new first multiplexing set and adding the signaling content into the new first multiplexing set; in response to that multiple signaling contents exist in the first multiplexing set, after the first multiplexing set is generated for a preset time, generating the first protocol data unit by multiplexing signaling contents in the first multiplexing set, and destroying the first multiplexing set;
in response to that the first multiplexing set exists, determining whether the signaling content is capable of being executed in parallel with each signaling content to be transmitted in the first multiplexing set;
in response to that parallel execution is possible, adding the signaling content into the first multiplexing set; and
in response to that parallel execution is not possible, generating a new first multiplexing set and adding the signaling content into the new first multiplexing set.

Furthermore, the processor 1001 can call the wireless communication program stored in the memory 1005 and further perform the following operations:
the generating the first protocol data unit by multiplexing signaling contents in the first multiplexing set includes:
for each signaling content in the first multiplexing set, generating the frame body according to the signaling content and generating the frame header according to the signaling content, and combining the generated frame body and frame header into a signaling frame; and
after traversing each signaling content in the first multiplexing set to obtain each signaling frame, combining the signaling frames into the first protocol data unit.

Furthermore, the processor 1001 can call the wireless communication program stored in the memory 1005 and further perform the following operations:
applied to the second communication terminal, including:
receiving a first protocol data unit transmitted by a first communication terminal and parsing a frame header of the first protocol data unit to obtain frame header information, the frame header information includes at least a frame identifier;
determining a signaling type and a length type of the frame body according to the frame identifier, and determining a frame body in the first protocol data unit based on the length type, the length type is a fixed length type or a variable length type; and
parsing the frame body based on the signaling type to obtain signaling content.

Furthermore, the processor 1001 can call the wireless communication program stored in the memory 1005 and further perform the following operations:
the determining the frame body in the first protocol data unit based on the length type includes:
in response to that the length type is the fixed length type, using a first preset fixed region in the first protocol data unit as the frame body;
in response to that the length type is the variable length type, using a second preset fixed region in the first protocol data unit as length indication information; and
using a region in the first protocol data unit indicated by the length indication information as the frame body.

Furthermore, the processor 1001 can call the wireless communication program stored in the memory 1005 and further perform the following operations:
the wireless communication method includes:
in response to that multiple signaling contents are obtained by parsing the first protocol data unit, executing signaling corresponding to each signaling content and respectively generating feedback content of each instruction;
generating the second protocol data unit by multiplexing feedback contents that meet a second preset multiplexing condition; and
transmitting the second protocol data unit to the first communication terminal.

Furthermore, the processor 1001 can call the wireless communication program stored in the memory 1005 and further perform the following operations:
the generating the second protocol data unit by multiplexing the feedback contents that meet the second preset multiplexing condition includes:
after generating the feedback content, determining whether a second multiplexing set waiting to be multiplexed and transmitted exists;
in response to that the second multiplexing set does not exist, generating a new second multiplexing set and adding the feedback content into the new second multiplexing set; in response to that multiple feedback contents exist in the second multiplexing set, after the second multiplexing set is generated for a preset time, generating the second protocol data unit by multiplexing feedback contents in the second multiplexing set, and destroying the second multiplexing set; and
in response to that the second multiplexing set exists, adding the feedback content into the second multiplexing set.

Referring to FIG. 2, a first embodiment of the wireless communication method of the present application is applied to a first communication terminal, and the wireless communication method includes:
step S10, generating a frame body according to signaling content.

It should be noted that, in this embodiment, the wireless communication method mainly targets transmission of signaling in an industrial short-distance communication scenario. It can be understood that signaling in wireless communication is usually an instruction command. Therefore, compared with interaction of some specific service data, simpler interaction content can be used when implementing interaction of signaling information, so as to realize communication of signaling, thereby achieving an objective of reducing redundant interaction information and improving communication efficiency.

Exemplarily, the frame body is generated according to the signaling content. For different signaling, different signaling contents correspondingly exist. For example, the signaling content may be parameters for creating entities of each layer, a reason why a management station rejects establishment of a connection by a terminal station, a release indication, parameters for channel training, and the like. Taking the parameters for creating entities of each layer as an example, in a scenario of initial connection configuration between the first communication terminal and the second communication terminal, the first communication terminal is a side initiating a connection. Correspondingly, the first communication terminal needs to transmit parameters for creating entities of each layer to the second communication terminal, that is, specific signaling content. When generating the frame body, parameters corresponding to each field of the initial connection configuration are generated into a bit string, thereby forming the frame body.

Step S20, generating a frame header according to the signaling content, the frame header includes at least a frame identifier, the frame identifier being configured to characterize a signaling type of the signaling content and a length type of the frame body, and the length type is a fixed length type or a variable length type.

Exemplarily, the frame header is further generated according to the signaling content. Since the frame body is also generated according to the signaling content, the frame header may also be generated according to the frame body. The frame header at least includes a frame identifier, and the frame identifier is configured to characterize the signaling type of the signaling content and the length type of the frame body. The length type at least includes a fixed length type. In addition, the frame header usually also includes a protocol version. In a case that there is only one protocol version, the first communication terminal and the second communication terminal may agree on the protocol version in advance, and therefore overhead of the protocol version may also be saved. For example, a length of the frame identifier may be set to 5 bits, and for reasons of frame header bit alignment and function reservation, certain reserved bits may also be added in the frame header. Specifically, the number of reserved bits may be set according to an actual situation. Taking a frame identifier of 5 bits as an example for description, values of the frame identifier may be 00000, 00001, 00010, 00011, ... and the like, and each frame identifier may represent one type. For example, 00001 may represent an initial connection configuration frame. On this basis, the frame header of signaling content of the initial connection configuration frame type may be agreed to be of a fixed length, and therefore 00001 may also characterize that the frame body is of the fixed length. It can be understood that, for a region in which a frame body of the fixed length type is located, the first communication terminal and the second communication terminal may agree in advance. For example, for the frame body of the fixed length type, it may be agreed in advance that content of a preset length after the frame header in the first protocol data unit is the frame body, so that the second communication terminal can clearly determine the region where the frame body is located. It can be understood that, in the present embodiment, the frame identifier may be used to simultaneously characterize the signaling type of the signaling content and the length type of the frame body. In a case that the frame body is of the fixed length type, since the frame body has a fixed length, the region where the frame body is located in the first protocol data unit may be agreed in advance. Therefore, communication overhead for indicating the length of the frame body may be saved, thereby achieving the purpose of improving communication efficiency.

Step S30, combining the frame header and the frame body into a first protocol data unit, and transmitting the first protocol data unit to the second communication terminal.

Exemplarily, the frame header and the frame body may be sequentially combined to form one signaling frame, and one signaling frame is one first protocol data unit, and then the first protocol data unit is transmitted to the second communication terminal. Specifically, a transmission process may refer to an existing transmission manner, and therefore details are not described herein again.

In the present embodiment, when the first communication terminal generates a specific first protocol data unit, the frame identifier in the frame header in the first protocol data unit may characterize the signaling type of the signaling content and the length type of the frame body. The length type may be the fixed length type or the variable length type. It can be understood that, in a case that the length of the frame body is fixed, frame body length indication information may not be added into the first protocol data unit any longer, and when the second communication terminal knows that the frame body type in the first protocol data unit is the fixed length type, the second communication terminal may take content at a fixed position as the frame body. Therefore, when the frame body has the fixed length, the frame identifier simultaneously characterizes the signaling type of the signaling content and the length type of the frame body, so that signaling interactive communication between the first communication terminal and the second communication terminal may be implemented without transmitting frame body length indication information by the first communication terminal, thereby saving communication overhead and achieving the purpose of improving communication efficiency.

In an embodiment, generating the frame header according to the signaling content includes:
step S210, generating the frame identifier according to the signaling type of the signaling content;
step S220, in response to that the frame identifier characterizes the fixed length type, using the frame identifier as the frame header;
step S230, in response to that the frame identifier characterizes the variable length type, generating length indication information based on the frame body;
step S240, combining the frame identifier and the length indication information to obtain the frame header.

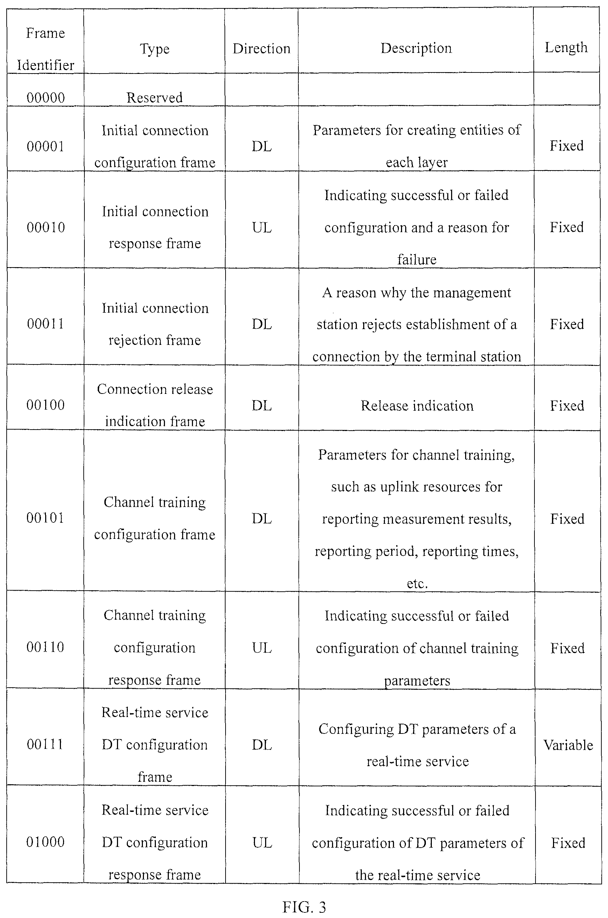

It should be noted that, in general, the frame header usually further includes a protocol version in addition to the frame identifier. In a case that only one protocol version exists, the protocol version may also not be included in the frame header, and the first communication terminal and the second communication terminal may agree on the protocol version in advance. In a case that the frame header includes the protocol version, a length of the protocol version may be set to 2 bits. Therefore, values of the protocol version may be 00, 01, 10, and 11, which may represent four different protocol versions, and can basically meet scenario requirements of industrial short-distance communication. On this basis, a length of reserved bits in the frame header may be 1 bit, and therefore a total length of the frame header is 8 bits. In addition, it should also be noted that the signaling type of the signaling content and the frame identifier may have a mapping relationship, that is, each signaling type corresponds to one frame identifier. For example, referring to FIG. 3, which shows a frame identifier information mapping table in the present application, and each frame identifier corresponds to one type. Taking the frame identifier 00001 as an example, 00001 represents that the type (signaling type) is an initial connection configuration frame, a direction is Down Link (DL), remarks are parameters for creating entities of each layer (that is, specific signaling content), and the length is fixed. In addition, types of the direction further include Up Link (UL). Content shown in FIG. 3 does not limit the signaling type, direction, and length represented by each frame identifier, and may be set by a person skilled in the art according to requirements.

Exemplarily, based on a pre-agreed mapping relationship or corresponding relationship, the frame identifier may be generated according to the signaling type of the signaling content. Meanwhile, the frame identifier also characterizes the length type of the frame body. In response to that the length type characterized by the frame identifier is the fixed length type, frame body length indication information does not need to be added into the frame header, and the generated frame identifier may be directly combined to obtain the frame header (in a case that a protocol version exists, the protocol version and the frame identifier may be combined to obtain the frame header). In this case, the obtained frame header is more concise, and there is no overhead of the length indication information, thereby achieving the purpose of improving communication efficiency. Conversely, in response to that the length type characterized by the frame identifier is the variable length type, corresponding length indication information needs to be generated, and the frame identifier and the length indication information are then combined to obtain the frame header (in a case that a protocol version exists, the protocol version, the frame identifier, and the length indication information may be combined to obtain the frame header). For the length indication information, the length of the length indication information may be preset to 8 bits. For example, 00000001 is length indication information, correspondingly indicating that the frame body length is 1 byte, 00000010 indicates that the frame body length is 2 bytes, ..., and 11111111 indicates that the frame body length is 255 bytes. It can be understood that, after receiving the first protocol data unit, the second communication terminal determines the frame body according to the length type characterized by the frame identifier in the first protocol data unit. For example, in response to that the length type is the fixed length type and the frame body length of the fixed length type is preset to 3 bytes, 3 bytes of content starting from the first bit after the frame identifier in the first protocol data unit may be taken as the frame body. In response to that the length type is the variable length type and the length of the length indication information is 8 bits, 8 bits of content starting from the first bit after the frame identifier in the first protocol data unit may be taken as the length indication information. Further, in response to that the length indicated by the length indication information is 6 bytes, 6 bytes of content starting from the first bit after the length indication information in the first protocol data unit may be taken as the frame body. In the present embodiment, the length of the frame body is divided into the fixed length type and the variable length type. In the scenario of the fixed length type, the length indication information does not need to be transmitted, thereby saving communication overhead and achieving the purpose of improving communication efficiency.

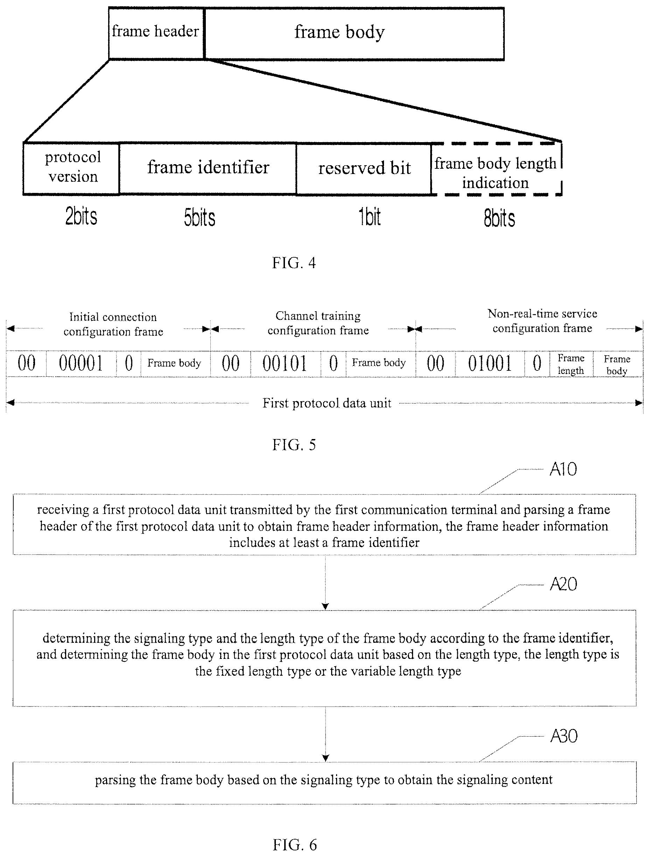

In addition, referring to FIG. 4, which shows a frame structure of a signaling frame in the present application. One signaling frame includes a frame header and a frame body. The frame header includes a protocol version, a frame identifier, reserved bits, and frame body length indication (frame body length indication information). In response to that the frame body has the fixed length type, the signaling frame does not include the frame body length indication.

In an embodiment, the wireless communication method further includes:
step S110, in response to that multiple signaling contents exist, generating the first protocol data unit by multiplexing signaling contents that meet a first preset multiplexing condition, the first preset multiplexing condition at least includes that multiplexed signaling contents are capable of being executed in parallel; and
step S120, performing the step of transmitting the first protocol data unit to the second communication terminal.

It should be noted that one frame header and a corresponding frame body may be combined to form one signaling frame. In the above example, one signaling frame is transmitted as one first protocol data unit. In the present embodiment, multiple signaling frames are placed into one first protocol data unit to complete transmission in a multiplexed form, that is, multiple signaling frames are transmitted on one physical resource block, thereby reducing overhead during interaction of signaling content and improving efficiency of signaling interaction. It should also be noted that, in current conventional solutions, multiple frames may also be aggregated together and transmitted through one scheduling operation in a multiplexed form. However, it should be noted that multiplexing in current conventional solutions is mostly applied to a scenario of transmitting service data frames. Compared with the signaling frames of the present application, service data frames do not have timing requirements. Content transmitted by the signaling frames is signaling, that is, control instructions. For control instructions, timing requirements may exist when a second communication terminal receiving the signaling executes the instructions. For example, one instruction needs to be executed first and another instruction is executed afterwards, and the second communication terminal executes the instructions according to a received time sequence order. Therefore, transmitting signaling frames in a multiplexed form may cause the second communication terminal receiving the signaling to execute corresponding signaling instructions incorrectly. Therefore, in this embodiment, only signaling frames that meet multiplexing conditions are transmitted in the multiplexed form.

Exemplarily, in a case that multiple signaling contents exist, it is determined whether the signaling contents can be executed in parallel for the receiving side, namely the second communication terminal. That is, in response to that execution sequence requirements exist among instructions corresponding to the signaling contents, the signaling contents are determined to be incapable of being executed in parallel. For example, for any signaling content, a conflict signaling content set having an execution sequence requirement with the signaling content may be preset. In response to that signaling contents in the conflict signaling content set exist among the multiple signaling contents, the multiple signaling contents are determined to be incapable of being executed in parallel. Correspondingly, the multiple signaling contents will not be selected to be transmitted in the multiplexed form. Conversely, in response to that the second communication terminal is determined to be capable of executing the signaling contents in parallel, that is, the signaling contents meet the first preset multiplexing condition, the signaling contents are generated into the first protocol data unit in the multiplexed form, and the first protocol data unit is then transmitted to the second communication terminal.

In an embodiment, generating the first protocol data unit by multiplexing signaling contents that meet the first preset multiplexing condition includes:
step S121, after receiving the signaling content, determining whether a first multiplexing set waiting to be multiplexed and transmitted currently exists;
step S122, in response to that the first multiplexing set does not exist, generating a new first multiplexing set and adding the signaling content into the new first multiplexing set, in response to that multiple signaling contents exist in the first multiplexing set, after the first multiplexing set has been generated for a preset time, generating the first protocol data unit by multiplexing signaling contents in the first multiplexing set, and destroying the first multiplexing set;
step S123, in response to that the first multiplexing set exists, determining whether the signaling content is capable of being executed in parallel with signaling contents waiting to be transmitted in the first multiplexing set;
step S124, in response to that parallel execution is possible, adding the signaling content into the first multiplexing set; and
step S125, in response to that parallel execution is not possible, performing the step of generating a new first multiplexing set and adding the signaling content into the new first multiplexing set.

Exemplarily, after receiving signaling content, the first communication terminal first determines whether a first multiplexing set waiting to be multiplexed and transmitted currently exists. Signaling contents in the first multiplexing set are combined together and transmitted in a multiplexed form. In response to that the first multiplexing set does not exist, the first communication terminal may generate a first multiplexing set to wait for other signaling contents to be transmitted together in the multiplexed form. In response to that multiple signaling contents exist in the first multiplexing set, after the first multiplexing set has been generated for a preset time, the signaling contents in the first multiplexing set are generated into the first protocol data unit in the multiplexed form. For example, in response to that the first multiplexing set has been generated for 10 ms, the signaling contents in the first multiplexing set may be generated into the first protocol data unit in the multiplexed form, so as to avoid the signaling contents waiting for transmission for a long time. In response to that only one signaling content exists in the first multiplexing set, after the first multiplexing set has been generated for the preset time, a frame header and a frame body are generated based on the signaling content, the frame header and the frame body are combined into one signaling frame, and the signaling frame is transmitted to the second communication terminal as one first protocol data unit.

In addition, after receiving the signaling content, in response to that the first multiplexing set exists, it is further determined whether the signaling content can be executed in parallel with signaling contents waiting to be transmitted in the first multiplexing set on the second communication terminal. A specific determination process may refer to the above description and is not repeated herein. In response to that parallel execution is possible, the signaling content is added into the first multiplexing set. Conversely, in response to that parallel execution is not possible, the step of generating a new first multiplexing set and adding the signaling content into the new first multiplexing set is performed.

In an embodiment, generating the first protocol data unit by multiplexing signaling contents in the first multiplexing set includes:
step S1221, for any signaling content in the first multiplexing set, performing the step of generating the frame body according to the signaling content and the step of generating the frame header according to the signaling content, and combining the generated frame body and frame header into a signaling frame;
step S1222, after traversing signaling contents in the first multiplexing set to obtain signaling frames, combining the signaling frames to generate the first protocol data unit.

Exemplarily, in a case that multiple signaling contents exist, a process of generating the frame header and the frame body for any signaling content is the same as the process of generating the frame header and the frame body in a case that only one signaling content exists, which may refer to the above description and is not repeated herein. The frame header and the frame body generated according to the signaling content are then combined to obtain one signaling frame. After traversing the signaling contents in the first multiplexing set to obtain the signaling frames, the signaling frames are combined to generate the first protocol data unit. For example, referring to FIG. 5, which is a schematic diagram of a scenario in which the first communication terminal performs multiplexed transmission in the present application. In FIG. 5, three signaling frames exist in the first protocol data unit, namely an initial connection configuration frame, a channel training configuration frame, and a non-real-time service configuration frame.

It can be understood that, in the present embodiment, the first communication terminal transmits multiple signaling contents to the second communication terminal in the multiplexed form, and ensures that the second communication terminal does not encounter errors due to timing relationships when executing instructions corresponding to the signaling contents, thereby improving utilization efficiency of a single physical resource block (protocol data unit), reducing overhead during signaling interaction, and improving efficiency of signaling interaction.

Referring to FIG. 6, based on the first embodiment of the wireless communication method of the present application, a second embodiment of the wireless communication method of the present application is provided. In the present embodiment, the same or similar contents as those in the above embodiment may refer to the above description and are not repeated herein. The wireless communication method is applied to a second communication terminal, and the method includes:
step A10, receiving a first protocol data unit transmitted by the first communication terminal and parsing a frame header of the first protocol data unit to obtain frame header information, the frame header information includes at least a frame identifier.

It should be noted that, in the present embodiment, the wireless communication method is applied to the second communication terminal. After the second communication terminal receives the first protocol data unit transmitted by the first communication terminal, the second communication terminal extracts frame header information from the frame header in the first protocol data unit, the frame header information includes at least a frame identifier. It can be understood that the frame header generally refers to content in a header region of the first protocol data unit. For example, in response to that the frame header length is 8 bits, the first 8 bits of the first protocol data unit are taken as the frame header, and the content of this part is then parsed to obtain the frame header information. For example, in response to that the protocol version is preset as fixed, the frame header may omit the protocol version and only include the frame identifier. Correspondingly, the content in the frame header may be taken as the frame identifier. In addition, the frame header may further include the protocol version. For example, in response to that it is preset that the frame header sequentially includes a protocol version (2 bits), a frame identifier (5 bits), and reserved bits (1 bit), and the content of the frame header is 01000010, parsing results indicate that 01 is the protocol version, 00001 is the frame identifier, and 0 is the reserved bit.

Step A20, determining the signaling type and the length type of the frame body according to the frame identifier, and determining the frame body in the first protocol data unit based on the length type, the length type is the fixed length type or the variable length type.

Exemplarily, the frame identifier may characterize the signaling type and the length type of the frame body. After parsing the frame identifier, the second communication terminal may determine the signaling type and the length type of the frame body characterized by the frame identifier based on the mapping table described in FIG. 3. The length type may be the fixed length type or the variable length type. The frame body in the first protocol data unit is then determined according to the length type. It can be understood that, in the case of the fixed length type, the first communication terminal and the second communication terminal may agree in advance on a position of the frame body with the fixed length in the first protocol data unit. When the second communication terminal determines according to the frame identifier that the frame body has the fixed length type, the second communication terminal directly takes content at the pre-agreed position in the first protocol data unit as the frame body. Therefore, frame body length indication information does not need to be included in the frame header of the first protocol data unit, thereby making the frame header more concise, reducing communication overhead, and improving communication efficiency.

Step A30, parsing the frame body based on the signaling type to obtain the signaling content.

Exemplarily, the frame body in the determined first protocol data unit is further parsed based on the signaling type. The signaling type may characterize a meaning of the signaling content in the frame body, thereby obtaining specific signaling. For example, referring to FIG. 3, in response to that the frame identifier is 00001, the frame identifier characterizes an initial connection configuration frame, and content in the frame body includes parameters for creating entities of each layer. It should be noted that parsing of the frame body usually also involves the protocol version. In response to that the frame header includes the protocol version, the frame body may be parsed based on the protocol version and the frame identifier. In addition, parsing of the frame body may also refer to conventional solutions, and therefore details are not described herein again.

In the present embodiment, the second communication terminal receives the first protocol data unit transmitted by the first communication terminal, and parses the frame header of the first protocol data unit to obtain frame header information, the frame header information includes at least a frame identifier. The second communication terminal determines the signaling type and the length type of the frame body according to the frame identifier, and determines the frame body in the first protocol data unit based on the length type, the length type is the fixed length type or the variable length type. The second communication terminal parses the frame body based on the signaling type to obtain the signaling content. That is, when the first communication terminal generates a specific first protocol data unit, the frame identifier in the frame header in the first protocol data unit may characterize the signaling type of the signaling content and the length type of the frame body. The length type may be the fixed length type or the variable length type. It can be understood that, in response to that the length of the frame body is fixed, frame body length indication information does not need to be added into the first protocol data unit. When the second communication terminal knows that the frame body type in the first protocol data unit is the fixed length type, the second communication terminal may take content at a fixed position as the frame body. Therefore, in response to that the frame body has the fixed length type, the frame identifier simultaneously characterizes the signaling type of the signaling content and the length type of the frame body. In this way, signaling interactive communication between the first communication terminal and the second communication terminal may be implemented without transmitting frame body length indication information by the first communication terminal, thereby saving communication overhead and achieving the purpose of improving communication efficiency.

In an embodiment, determining the frame body in the first protocol data unit based on the length type includes:
step A210, in response to that the length type is the fixed length type, taking a first preset fixed region in the first protocol data unit as the frame body;
step A220, in response to that the length type is the variable length type, taking a second preset fixed region in the first protocol data unit as length indication information;
step A230, taking a region in the first protocol data unit indicated by the length indication information as the frame body.

Exemplarily, also based on the example of FIG. 3, according to the mapping table shown in FIG. 3, the length type characterized by the current frame identifier may be determined. In response to that the length type is the fixed length type, the first preset fixed region in the first protocol data unit is taken as the frame body. The first preset fixed region is a pre-agreed region. For example, in response to that it is preset that the frame body of the fixed length type has a length of 3 bytes, the first preset fixed region is a region corresponding to 3 bytes after the frame identifier in the first protocol data unit. Correspondingly, the content of 3 bytes after the frame identifier in the first protocol data unit is taken as the frame body. In response to that the length type is the variable length type, the second preset fixed region in the first protocol data unit is taken as the length indication information, and a region indicated by the length indication information is taken as the frame body. For example, in response to that the length of the length indication information is 8 bits, the second preset fixed region is a region corresponding to 8 bits after the frame identifier in the first protocol data unit. Correspondingly, the second preset fixed region is taken as the length indication information. In response to that the length indication information is 00000011, the frame body length is 3 bytes. Correspondingly, a region of 3 bytes after the second preset fixed region is taken as the region indicated by the length indication information, and the region is then taken as the frame body. Therefore, in the present embodiment, the length of the frame body is divided into the fixed length type and the variable length type. In the scenario of the fixed length type, length indication information does not need to be transmitted, thereby saving communication overhead and achieving the purpose of improving communication efficiency.

In an embodiment, the wireless communication method includes:
step A110, in response to that multiple signaling contents exist after parsing the first protocol data unit, executing signaling corresponding to each signaling content and respectively generating feedback content of each instruction;
step A120, generating a second protocol data unit by multiplexing feedback contents that meet a second preset multiplexing condition; and
step A130, transmitting the second protocol data unit to the first communication terminal.

It should be noted that the first protocol data unit may be obtained by combining multiple signaling frames. In this case, when the second communication terminal parses the first protocol data unit, multiple signaling contents are obtained. For example, assuming that the first protocol data unit is obtained by sequentially combining signaling frame A and signaling frame B, and assuming that it is preset that the frame header of each signaling frame sequentially includes a protocol version (2 bits), a frame identifier (5 bits), and reserved bits (1 bit), when parsing is performed by the second communication terminal, the first 8 bits of the first protocol data unit may be taken as the frame header according to the preset agreement, and the frame header information is obtained through parsing. The second communication terminal then determines the length type of the frame body according to the frame identifier in the frame header information, and determines the frame body based on the length type. It can be understood that the parsing performed at this time corresponds to signaling frame A. In response to that content in the first protocol data unit still remains unparsed, the second communication terminal again takes a header region of the unparsed content in the first protocol data unit as the frame header according to the preset agreement of the frame header and performs parsing again, that is, signaling frame B is parsed. The above process continues until the first protocol data unit is completely parsed, and one signaling content is obtained after one signaling frame is parsed.

Exemplarily, in response to that multiple signaling contents are obtained through parsing, the second communication terminal executes signaling corresponding to the signaling contents and respectively generates feedback content of each instruction. The feedback content may indicate execution conditions of the signaling, for example, successful execution or failed execution. In response to that execution fails, a reason for the failure may also be included. In response to that only one feedback content exists, another signaling frame may be generated based on the feedback content, and the signaling frame is transmitted to the first communication terminal as one second protocol data unit. Specifically, the generation process may refer to the first embodiment. Only the signaling content needs to be replaced with the feedback content, and therefore details are not repeated herein. In response to that multiple feedback contents exist, feedback contents that meet the second preset multiplexing condition are generated into the second protocol data unit in the multiplexed form. Similarly, signaling frames generated based on the feedback contents are combined as one second protocol data unit. Specifically, multiplexed transmission may also refer to the above first embodiment. The signaling content is replaced with the feedback content, and the first protocol data unit is replaced with the second protocol data unit, and therefore details are not repeated herein.

In an embodiment, generating the second protocol data unit by multiplexing feedback contents that meet the second preset multiplexing condition includes:
step A121, after generating the feedback content, determining whether a second multiplexing set waiting to be multiplexed and transmitted currently exists;
step A122, in response to that the second multiplexing set does not exist, generating a new second multiplexing set, in response to that multiple feedback contents exist in the second multiplexing set, after the second multiplexing set has been generated for a preset time, generating the second protocol data unit by multiplexing feedback contents in the second multiplexing set, and destroying the second multiplexing set; and
step A123, in response to that the second multiplexing set exists, adding the feedback content into the second multiplexing set.

It should be noted that, compared with signaling content that needs to be executed by the second communication terminal, feedback content usually does not need to be executed by the first communication terminal. Therefore, when transmitting the feedback content to the first communication terminal in the multiplexed form, execution timing does not need to be considered.

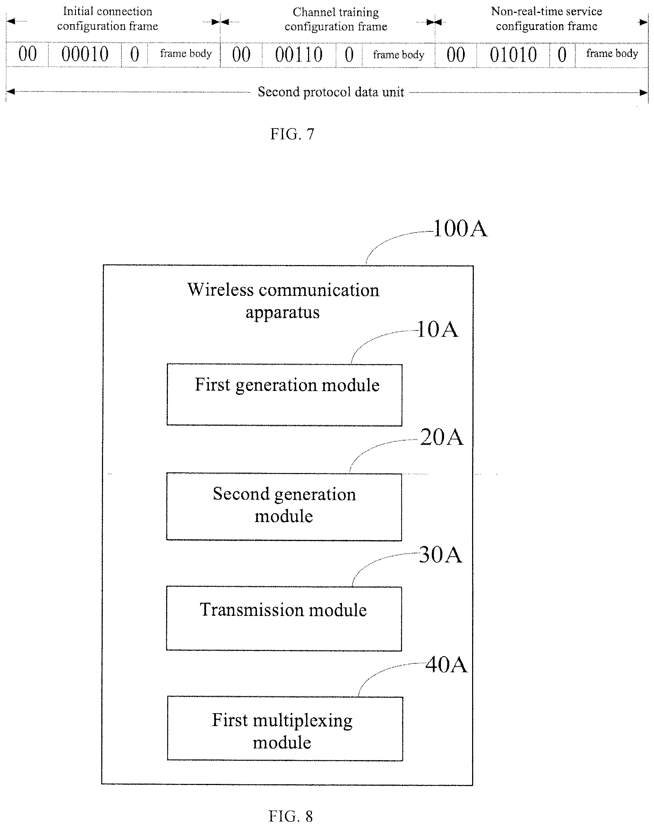

Exemplarily, after generating the feedback content, the second communication terminal first determines whether a second multiplexing set waiting to be multiplexed and transmitted currently exists. In response to that the second multiplexing set does not exist, a new second multiplexing set is generated. In response to that multiple feedback contents exist in the second multiplexing set, after the second multiplexing set has been generated for a preset time, feedback contents in the second multiplexing set are generated into the second protocol data unit in the multiplexed form, and the second multiplexing set is destroyed. It can be understood that, due to differences in signaling content, time required for the second communication terminal to execute signaling corresponding to the signaling content is different. Correspondingly, time at which the second communication terminal generates feedback content of each signaling may also be different. In order to avoid excessive waiting time of some feedback contents, existence time of the second multiplexing set is limited in the present embodiment. That is, after the second multiplexing set has been generated for the preset time, the feedback contents in the second multiplexing set are generated into the second protocol data unit in the multiplexed form, and the second multiplexing set is destroyed. In response to that the second multiplexing set exists, the feedback content is directly added into the second multiplexing set. For example, referring to FIG. 7, which is a schematic diagram of a scenario in which the second communication terminal performs multiplexed transmission in the present application. In FIG. 7, the second protocol data unit sequentially includes an initial connection configuration response frame, a channel training configuration response frame, and a non-real-time service configuration response frame.

In addition, an embodiment of the present application further provides a wireless communication system. The wireless communication system includes:
a first communication terminal configured to generate a frame body according to signaling content;
generate a frame header according to the signaling content, the frame header includes at least a frame identifier configured to characterize a signaling type of the signaling content and a length type of the frame body, and the length type is the fixed length type or the variable length type;
combine the frame header and the frame body into a first protocol data unit, and transmit the first protocol data unit to a second communication terminal; and
a second communication terminal configured to receive the first protocol data unit transmitted by the first communication terminal and parse a frame header of the first protocol data unit to obtain frame header information, the frame header information includes at least a frame identifier;
determine a signaling type and a length type of the frame body according to the frame identifier, and determine a frame body in the first protocol data unit based on the length type, the length type is the fixed length type or the variable length type; and
parse the frame body based on the signaling type to obtain signaling content.

In an embodiment, generating the frame header according to the signaling content includes:
generating the frame identifier according to the signaling type of the signaling content;
in response to that the frame identifier characterizes the fixed length type, using the frame identifier as the frame header;
in response to that the frame identifier characterizes the variable length type, generating length indication information based on the frame body; and
combining the frame identifier and the length indication information to obtain the frame header.

In an embodiment, the wireless communication method further includes:
in response to that multiple signaling contents exist, generating the first protocol data unit by multiplexing signaling contents that meet a first preset multiplexing condition, the first preset multiplexing condition at least includes that multiplexed signaling contents are capable of being executed in parallel; and
performing the step of transmitting the first protocol data unit to the second communication terminal.

In an embodiment, generating the first protocol data unit by multiplexing signaling contents that meet a first preset multiplexing condition includes:
after receiving the signaling content, determining whether a first multiplexing set waiting to be multiplexed and transmitted currently exists;
in response to that the first multiplexing set does not exist, generating a new first multiplexing set and adding the signaling content into the new first multiplexing set, in response to that multiple signaling contents exist in the first multiplexing set, after the first multiplexing set has been generated for a preset time, generating the first protocol data unit by multiplexing signaling contents in the first multiplexing set, and destroying the first multiplexing set;
in response to that the first multiplexing set exists, determining whether the signaling content is capable of being executed in parallel with signaling contents waiting to be transmitted in the first multiplexing set;
in response to that parallel execution is possible, adding the signaling content into the first multiplexing set; and
in response to that parallel execution is not possible, performing the step of generating a new first multiplexing set and adding the signaling content into the new first multiplexing set.

In an embodiment, generating the first protocol data unit by multiplexing signaling contents in the first multiplexing set includes:
for any signaling content in the first multiplexing set, performing the step of generating the frame body according to the signaling content and the step of generating the frame header according to the signaling content, and combining the generated frame body and frame header into a signaling frame; and
after traversing signaling contents in the first multiplexing set to obtain signaling frames, combining the signaling frames to generate the first protocol data unit.

In an embodiment, determining the frame body in the first protocol data unit based on the length type includes:
in response to that the length type is the fixed length type, taking a first preset fixed region in the first protocol data unit as the frame body;
in response to that the length type is the variable length type, taking a second preset fixed region in the first protocol data unit as length indication information; and
taking a region in the first protocol data unit indicated by the length indication information as the frame body.

In an embodiment, the wireless communication method includes:
in response to that multiple signaling contents are obtained after parsing the first protocol data unit, executing signaling corresponding to each signaling content and respectively generating feedback content of each instruction;
generating a second protocol data unit by multiplexing feedback contents that meet a second preset multiplexing condition; and
transmitting the second protocol data unit to the first communication terminal.

In an embodiment, generating the second protocol data unit by multiplexing feedback contents that meet a second preset multiplexing condition includes:
after generating the feedback content, determining whether a second multiplexing set waiting to be multiplexed and transmitted currently exists;
in response to that the second multiplexing set does not exist, generating a new second multiplexing set and adding the feedback content into the new second multiplexing set, in response to that multiple feedback contents exist in the second multiplexing set, after the second multiplexing set has been generated for a preset time, generating the second protocol data unit by multiplexing feedback contents in the second multiplexing set, and destroying the second multiplexing set; and
in response to that the second multiplexing set exists, adding the feedback content into the second multiplexing set.

Additionally, according to FIG. 8, an embodiment of the present application further provides a wireless communication apparatus 100A applied to a first communication terminal. The wireless communication apparatus 100A includes:
a first generation module 10A configured to generate a frame body according to signaling content;
a second generation module 20A configured to generate a frame header according to the signaling content, the frame header at least includes a frame identifier, the frame identifier is configured to characterize a signaling type of the signaling content and a length type of the frame body, and the length type is a fixed length type or a variable length type; and
a transmission module 30A configured to combine the frame header and the frame body into a first protocol data unit (Protocol Data Unit, PDU), and transmit the first protocol data unit to a second communication terminal.

In an embodiment, the second generation module 20A is further configured to:
generate the frame identifier according to the signaling type of the signaling content;
in response to that the length type characterized by the frame identifier is a fixed length type, use the frame identifier as the frame header;
in response to that the length type characterized by the frame identifier is a variable length type, generate length indication information based on the frame body; and
combine the frame identifier and the length indication information to obtain the frame header.

In an embodiment, the wireless communication apparatus 100A further includes a first multiplexing module 40A, and the first multiplexing module 40A is configured to:
in response to that multiple signaling contents exist, generate the first protocol data unit by multiplexing signaling contents that meet a first preset multiplexing condition, the first preset multiplexing condition at least includes that signaling contents to be multiplexed and transmitted can be executed in parallel; and
execute the step of transmitting the first protocol data unit to the second communication terminal.

In an embodiment, the first multiplexing module 40A is further configured to:
after receiving the signaling content, determine whether a first multiplexing set waiting for multiplexed transmission currently exists;
in response to that the first multiplexing set does not exist, generate a new first multiplexing set and add the signaling content into the new first multiplexing set, in response to that multiple signaling contents exist in the first multiplexing set, after the first multiplexing set has been generated for a preset time, generate the first protocol data unit by multiplexing signaling contents in the first multiplexing set, and destroy the first multiplexing set;
in response to that the first multiplexing set exists, determine whether the signaling content can be executed in parallel with signaling contents to be transmitted in the first multiplexing set;
in response to that the signaling content can be executed in parallel, add the signaling content into the first multiplexing set; and
in response to that the signaling content cannot be executed in parallel, execute the step of generating a new first multiplexing set and adding the signaling content into the new first multiplexing set.

In an embodiment, the first multiplexing module 40A is further configured to:
for any signaling content in the first multiplexing set, execute the step of generating the frame body according to the signaling content and the step of generating the frame header according to the signaling content, and combine the generated frame body and frame header to obtain a signaling frame; and
after traversing signaling contents in the first multiplexing set to obtain corresponding signaling frames, combine the signaling frames to obtain the first protocol data unit.

The wireless communication apparatus provided in the present application adopts the wireless communication system method described in the above embodiments, and aims to solve the technical problem that, in industrial scenarios where wireless communication interaction is implemented, the traditional communication manner involves information redundancy, thereby affecting communication efficiency. Compared with the related art, the beneficial effects of the electronic device provided in embodiments of the present application are the same as the beneficial effects of the wireless communication method provided in the above embodiments, and other technical features of the wireless communication apparatus are the same as the features disclosed in the method embodiments described above, and details are not repeated herein.

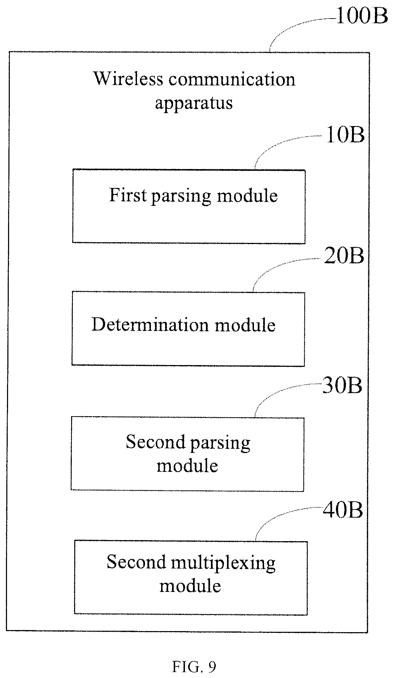

Additionally, according to FIG. 9, an embodiment of the present application further provides a wireless communication apparatus 100B applied to a second communication terminal. The wireless communication apparatus 100B includes:
a first parsing module 10B configured to receive a first protocol data unit (Protocol Data Unit, PDU) transmitted by the first communication terminal, and parse a frame header of the first protocol data unit to obtain frame header information, the frame header information at least includes a frame identifier;
a determination module 20B configured to determine a signaling type and a length type of a frame body according to the frame identifier, and determine the frame body in the first protocol data unit based on the length type, the length type is a fixed length type or a variable length type; and
a second parsing module 30B configured to parse the frame body based on the signaling type to obtain signaling content.

In an embodiment, the determination module 20B is further configured to:
in response to that the length type is a fixed length type, use a first preset fixed region in the first protocol data unit as the frame body;
in response to that the length type is a variable length type, use a second preset fixed region in the first protocol data unit as length indication information; and
use a region in the first protocol data unit indicated by the length indication information as the frame body.

In an embodiment, the wireless communication apparatus 100B further includes a second multiplexing module 40B, and the second multiplexing module 40B is configured to:
in response to that multiple signaling contents are obtained by parsing the first protocol data unit, execute signaling corresponding to the signaling contents, and generate feedback content of each instruction;
generate a second protocol data unit by multiplexing feedback contents that meet a second preset multiplexing condition; and
transmit the second protocol data unit to the first communication terminal.

In an embodiment, the second multiplexing module 40B is further configured to:
after generating the feedback content, determine whether a second multiplexing set waiting for multiplexed transmission currently exists;
in response to that the second multiplexing set does not exist, generate a new second multiplexing set and add the feedback content into the new second multiplexing set, in response to that multiple feedback contents exist in the second multiplexing set, after the second multiplexing set has been generated for a preset time, generate the second protocol data unit by multiplexing feedback contents in the second multiplexing set and destroy the second multiplexing set; and
in response to that the second multiplexing set exists, add the feedback content into the second multiplexing set.

The wireless communication apparatus provided in the present application adopts the wireless communication system method described in the above embodiments, and aims to solve the technical problem that, in industrial scenarios where wireless communication interaction is implemented, the traditional communication manner involves information redundancy, thereby affecting communication efficiency. Compared with the related art, the beneficial effects of the electronic device provided in embodiments of the present application are the same as the beneficial effects of the wireless communication method provided in the above embodiments, and other technical features of the wireless communication apparatus are the same as the features disclosed in the method embodiments described above, and details are not repeated herein.

Additionally, embodiments of the present application further provide a wireless communication device. The wireless communication device includes: a memory, a processor, and a wireless communication program stored in the memory and executable on the processor. When the wireless communication program is executed by the processor, steps of the wireless communication method described above are implemented.

Specific implementations of the wireless communication device in embodiments of the present application are substantially the same as implementations of the wireless communication method in the above embodiments, and details are not repeated herein.

Additionally, embodiments of the present application further provide a readable storage medium. The readable storage medium is a computer-readable storage medium on which a wireless communication program is stored. When the wireless communication program is executed by a processor, steps of the wireless communication method described above are implemented.

Specific implementations of the storage medium in embodiments of the present application are substantially the same as implementations of the wireless communication method in the above embodiments, and details are not repeated herein.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element.

The serial numbers of the foregoing embodiments of the present application are only for description, and do not represent the advantages and disadvantages of the embodiments.

Through the description of the above embodiment, those skilled in the art can clearly understand that the above-mentioned embodiments can be implemented by software plus a necessary general hardware platform, of course, it can also be implemented by hardware, but in many cases the former is a better implementation. Based on this understanding, the technical solution of the present application can be embodied in the form of software product in essence or the part that contributes to the existing technology. The computer software product is stored on a storage medium (such as ROM/RAM, magnetic disk, optical disk) as described above, including several instructions to cause a terminal device (which can be a mobile phone, a computer, a server, or a network device, etc.) to execute the method described in each embodiment of the present application.

The above are only some embodiments of the present application, and do not limit the scope of the present application thereto. Under the concept of the present application, equivalent structural transformations made according to the description and drawings of the present application, or direct/indirect application in other related technical fields are included in the scope of the present application.

## Claims

1. A wireless communication method, applied to a first communication terminal, **characterized by** comprising:
generating a frame body according to signaling content;
generating a frame header according to the signaling content, wherein the frame header comprises at least a frame identifier configured to characterize a signaling type of the signaling content and a length type of the frame body, and the length type is a fixed length type or a variable length type;
combining the frame header and the frame body into a first protocol data unit; and
transmitting the first protocol data unit to a second communication terminal.

2. The wireless communication method according to claim 1, wherein the generating the frame header according to the signaling content comprises:
generating the frame identifier according to the signaling type of the signaling content;
in response to that the frame identifier characterizes the fixed length type, using the frame identifier as the frame header;
in response to that the frame identifier characterizes the variable length type, generating length indication information based on the frame body; and
combining the frame identifier and the length indication information to obtain the frame header.

3. The wireless communication method according to claim 1, further comprising:
in response to that multiple signaling contents exist, generating the first protocol data unit by multiplexing signaling contents that meet a first preset multiplexing condition, wherein the first preset multiplexing condition at least comprises that multiplexed signaling contents are capable of being executed in parallel; and
transmitting the first protocol data unit to the second communication terminal.

4. The wireless communication method according to claim 3, wherein the generating the first protocol data unit by multiplexing the signaling contents that meet a first preset multiplexing condition comprises:
after receiving the signaling content, determining whether a first multiplexing set waiting to be multiplexed and transmitted exists;
in response to that the first multiplexing set does not exist, generating a new first multiplexing set and adding the signaling content into the new first multiplexing set; in response to that multiple signaling contents exist in the first multiplexing set, after the first multiplexing set is generated for a preset time, generating the first protocol data unit by multiplexing signaling contents in the first multiplexing set, and destroying the first multiplexing set;
in response to that the first multiplexing set exists, determining whether the signaling content is capable of being executed in parallel with each signaling content to be transmitted in the first multiplexing set;
in response to that parallel execution is possible, adding the signaling content into the first multiplexing set; and
in response to that parallel execution is not possible, generating a new first multiplexing set and adding the signaling content into the new first multiplexing set.

5. The wireless communication method according to claim 4, wherein the generating the first protocol data unit by multiplexing signaling contents in the first multiplexing set comprises:
for each signaling content in the first multiplexing set, generating the frame body according to the signaling content and generating the frame header according to the signaling content, and combining the generated frame body and frame header into a signaling frame; and
after traversing each signaling content in the first multiplexing set to obtain each signaling frame, combining the signaling frames into the first protocol data unit.

6. A wireless communication method, applied to a second communication terminal, **characterized by** comprising:
receiving a first protocol data unit transmitted by a first communication terminal and parsing a frame header of the first protocol data unit to obtain frame header information, wherein the frame header information comprises at least a frame identifier;
determining a signaling type and a length type of the frame body according to the frame identifier, and determining a frame body in the first protocol data unit based on the length type, wherein the length type is a fixed length type or a variable length type; and
parsing the frame body based on the signaling type to obtain signaling content.

7. The wireless communication method according to claim 6, wherein the determining the frame body in the first protocol data unit based on the length type comprises:
in response to that the length type is the fixed length type, using a first preset fixed region in the first protocol data unit as the frame body;
in response to that the length type is the variable length type, using a second preset fixed region in the first protocol data unit as length indication information; and
using a region in the first protocol data unit indicated by the length indication information as the frame body.

8. The wireless communication method according to claim 6, further comprising:
in response to that multiple signaling contents are obtained by parsing the first protocol data unit, executing signaling corresponding to each signaling content and respectively generating feedback content of each instruction;
generating the second protocol data unit by multiplexing feedback contents that meet a second preset multiplexing condition; and
transmitting the second protocol data unit to the first communication terminal.

9. The wireless communication method according to claim 8, wherein the generating the second protocol data unit by multiplexing the feedback contents that meet the second preset multiplexing condition comprises:
after generating the feedback content, determining whether a second multiplexing set waiting to be multiplexed and transmitted exists;
in response to that the second multiplexing set does not exist, generating a new second multiplexing set and adding the feedback content into the new second multiplexing set; in response to that multiple feedback contents exist in the second multiplexing set, after the second multiplexing set is generated for a preset time, generating the second protocol data unit by multiplexing feedback contents in the second multiplexing set, and destroying the second multiplexing set; and
in response to that the second multiplexing set exists, adding the feedback content into the second multiplexing set.

10. A wireless communication system, **characterized by** comprising:
a first communication terminal configured to:
generate a frame body according to signaling content;
generate a frame header according to the signaling content, wherein the frame header comprises at least a frame identifier configured to characterize a signaling type of the signaling content and a length type of a frame body, and the length type is a fixed length type or a variable length type; and
combine the frame header and the frame body into a first protocol data unit, and transmit the first protocol data unit to a second communication terminal; and
a second communication terminal configured to:
receive the first protocol data unit transmitted by the first communication terminal and parse a frame header of the first protocol data unit to obtain frame header information, wherein the frame header information comprises at least a frame identifier;
determine a signaling type and a length type of a frame body according to the frame identifier, and determine a frame body in the first protocol data unit based on the length type, wherein the length type is a fixed length type or a variable length type; and
parse the frame body based on the signaling type to obtain the signaling content.

11. A wireless communication apparatus, applied to a first communication terminal, **characterized by** comprising:
a first generation module configured to generate a frame body according to signaling content;
a second generation module configured to generate a frame header based on the signaling content, wherein the frame header comprises at least a frame identifier configured to characterize a signaling type of the signaling content and a length type of the frame body, and the length type is a fixed length type or a variable length type; and
a transmission module configured to combine the frame header and the frame body into a first protocol data unit and transmit the first protocol data unit to a second communication terminal.

12. A wireless communication apparatus, applied to a second communication terminal, **characterized by** comprising:
a first parsing module configured to receive the first protocol data unit transmitted by a first communication terminal and parse a frame header of the first protocol data unit to obtain frame header information, wherein the frame header information comprises at least a frame identifier;
a determination module configured to determine a signaling type and a length type of a frame body according to the frame identifier, and determine the frame body in the first protocol data unit based on the length type, wherein the length type is a fixed length type or a variable length type; and
a second parsing module configured to parse the frame body based on the signaling type to obtain signaling content.

13. A wireless communication device, **characterized by** comprising: a memory, a processor, and a wireless communication program stored in the memory and executable on the processor, wherein the wireless communication program, when executed by the processor, implements the wireless communication method according to any one of claims 1 to 9.

14. A readable storage medium, **characterized in that** the readable storage medium is a computer-readable storage medium and a wireless communication program is stored on the readable storage medium, wherein the wireless communication program, when executed by a processor, implements the wireless communication method according to any one of claims 1 to 9.
